# EUROPÄISCHE PATENTSCHRIFT

(11) **EP 3 219 396 B1**
(45) Veröffentlichungstag und Bekanntmachung des Hinweises auf die Patenterteilung: **29.04.2020**
(21) Anmeldenummer: 16160739.5
(22) Anmeldetag: 16.03.2016
(51) Int. Cl.: B05B 15/00

(54) **LACKIERANLAGE UND VERFAHREN ZUM LACKIEREN EINES WERKSTÜCKS SOWIE FILTERELEMENT HIERFÜR**
PAINTING INSTALLATION AND METHOD FOR PAINTING A WORKPIECE AND FILTER ELEMENT FOR SAME
INSTALLATION DE PEINTURE ET PROCEDE DE PEINTURE D'UNE PIECE AINSI QU'ELEMENT FILTRANT A CET EFFET

(43) Veröffentlichungstag der Anmeldung: 20.09.2017
(73) Patentinhaber: Sturm Maschinen- & Anlagenbau GmbH, 94330 Salching (DE)
(72) Erfinder: Völlinger, Ralf, 94315 Straubing (DE); Ratzka, Uwe, 94339 Leiblfing (DE); Hoffmann, Simon, 84152 Mengkofen (DE)
(74) Vertreter: Wunderlich & Heim Patentanwälte Partnerschaftsgesellschaft mbB

(56) Entgegenhaltungen:
- EP-A1- 3 050 611
- EP-B1- 0 526 533
- WO-A1-2016/065451
- DE-A1- 3 406 464
- DE-A1-102005 013 710
- DE-A1-102008 046 409
- DE-U1-202015 101 003
- US-A1- 2008 092 501
- US-A1- 2011 290 116

## Beschreibung

Die Erfindung betrifft eine Lackieranlage zum Lackieren eines Werkstücks mit einer Lackierstation, in welcher mittels mindestens einer Lackiervorrichtung eine Beschichtung auf das Werkstück aufbringbar ist, und einer Absaugstation, welche unterhalb der Lackierstation angeordnet ist, und eine Absaugeinrichtung mit einem Filterelement aufweist, über welche Luft mit Overspray aus der Lackierstation ansaugbar ist, wobei Overspray aus der angesaugten Luft an dem Filterelement abgeschieden wird, gemäß dem Oberbegriff des Anspruchs 1.

Des Weiteren betrifft die Erfindung ein Verfahren zum Lackieren eines Werkstücks, wobei in einer Lackierstation mittels mindestens einer Lackiervorrichtung eine Beschichtung auf das Werkstück aufgesprüht wird und in einer Absaugstation, welche unterhalb der Lackierstation angeordnet ist, mit einem Filterelement Luft mit Overspray aus der Lackierstation angesaugt wird, wobei Overspray aus der angesaugten Luft an dem Filterelement abgeschieden wird, gemäß dem Oberbegriff des Anspruchs 12.

Ein gattungsgemäßer Stand der Technik geht aus der DE 10 2011 108 631 A1 hervor. Bei diesem bekannten Verfahren und der bekannten Vorrichtung wird aus einer obenliegenden Lackierstation Luft mit Overspray über eine Absaugeinrichtung nach unten abgesaugt. Dabei ist in einem oberen Bereich der Absaugstation eine Ansaugöffnung vorgesehen. Über diese wird die angesaugte Luft von oben in ein kastenförmiges Filterelement eingeleitet. Die gefilterte Luft wird anschließend an einer Rückseite des kastenförmigen Filterelementes ausgeleitet.

Aus der DE 102 09 499 A1 geht eine Anlage zum Beschichten von Gegenständen mit Pulver hervor. Bei dieser Pulverbeschichtungsanlage sind in einem unteren Bereich Filtereinheiten verfahrbar entlang von Schienen aufgehängt. Die Filtereinheiten weisen einen trommelförmigen oder quaderförmigen Abschnitt und einen darunter angeordneten trichterförmigen Abschnitt auf. Der trichterförmige Abschnitt dient zum Ansammeln abgeschiedener Pulverpartikel, welche über Leitungen zur Wiederverwendung abgeführt werden können.

Aus der DE 201 05 239 U1 geht ein Abscheidesystem für Farbpartikel in der Abluft von Lackierkabinen hervor. Zur Abscheidung von Luft sind seitlich angeordnete, auswechselbare Filterkassetten vorgesehen.

Ein Filter zum Filtern von Sprühnebeln ist aus der DE 10 2009 034 863 A1 bekannt. Der Filter weist als zur Filterung wirksames Medium ein Papiergelege auf, wobei aus dem Papiergelege Filtertaschen gebildet sind. Die Filtertaschen sind modulartig zusammengefasst.

Bei der sogenannten Trockenabscheidung von Overspray aus Lackieranlagen ist es angestrebt, möglichst viel Overspray an den wechselbaren Filterelementen abzuscheiden. Schlägt sich Overspray an den Wänden der Anlage ab, so bildet sich eine zähe, klebrige Lackschicht, welche in regelmäßigen Abständen in aufwändiger Weise zu entfernen ist.

Zur Reduzierung des Aufwandes beim Abtragen der Lackschichten von Anlagenwänden ist bekannt, die Wände mit einer Öl- oder Fettschicht zu versehen, um ein Entfernen zu erleichtern. Die regelmäßige Wartung dieser Lackieranlagen ist so mit einem großen Zeit- und Arbeitsaufwand verbunden und reduziert die Nutzungszeit der Gesamtanlage.

Die WO 2016/065451 A1 lehrt eine Lackieranlage mit einer Lackierstation und einer Absaugstation, in welcher flächig in einem Bodenbereich ein Filterelement angeordnet ist.

Die DE 34 06 464 A1 betrifft eine Lackierkabine, bei welcher seitlich durch einen offenen Lackierraum Werkstücke transportiert werden, und unterhalb der Werkstücke Filterkerzen angeordnet sind, in denen ein Unterdruck erzeugt wird.

Die DE 10 2008 046 499 A1 betrifft ein Verfahren zum Abscheiden von Lackoverspray, bei welchem Lack über seitliche Öffnungen aus einer Lackierstation in eine trichterförmige Absaugstation eingeleitet werden, an dessen unterem Ende eine Abscheidevorrichtung zum Abscheiden von Overspray an Seitenplatten angeordnet sind.

Die DE 10 2005 013 710 A1 lehrt eine Vorrichtung zum Abtrennen von Nasslack-Overspray, bei welcher unter einer Lackierstation eine Absaugstation angeordnet ist, in deren Absaugraum seitlich in einer Seitenwand ein Filterelement an einem Grundkörper befestigt ist.

Der Erfindung liegt die **Aufgabe** zugrunde, eine Lackieranlage und ein Verfahren zum Lackieren anzugeben, welche einen besonders wirtschaftlichen Betrieb beim Lackieren ermöglichen.

Die Aufgabe wird durch eine Lackieranlage mit den Merkmalen des Anspruchs 1 beziehungsweise durch ein Verfahren mit den Merkmalen des Anspruchs 12 gelöst. Bevorzugte Ausführungsformen der Erfindung sind in den jeweils abhängigen Ansprüchen angegeben.

Bei der erfindungsgemäßen Lackieranlage ist vorgesehen, dass in einem unteren Bereich der Absaugstation eine Ansaugöffnung zum Abführen von Abluft angeordnet ist, dass das Filterelement auf die Ansaugöffnung aufgesetzt ist und dass das Filterelement etwa mittig in einem Absaugraum der Absaugstation angeordnet ist.

Ein Grundgedanke der Erfindung liegt darin, ein Filterelement etwa mittig und frei in einem Absaugraum der Absaugstation unterhalb der Lackierstation anzuordnen. Das Filterelement ist dabei so ausgebildet, dass ein freies Anströmen von Kabinenluft mit Overspray von allen Seiten ermöglicht ist. Zuführkanäle zum Zuführen der Luft zu dem Filterelement sind dabei nicht vorgesehen. Damit entfallen entsprechende Kanalwände, an denen sich Lackoverspray in größerem Umfang niederschlagen könnte. Die freie Aufstellung des Filterelementes in einem Ansaugraum ermöglicht es, dass das Filterelement umseitig von Luft angeströmt werden kann. So wird die mit Lack belastete Kabinenluft von den umgebenden Wänden des Absaugraumes weitgehend entfernt gehalten. Es ergibt sich mit der Zeit lediglich ein relativ geringer Lackniederschlag an den Wänden des Absaugraumes. Hierdurch werden die Wartungszyklen erheblich verlängert und gleichzeitig der Wartungsaufwand deutlich reduziert.

Eine bevorzugte Ausführungsform der Erfindung besteht darin, dass an der Lackierstation mindestens eine Lufteintrittsöffnung vorgesehen ist, durch welche Luft zuführbar ist. Es wird somit ständig Frischluft der Lackierstation zugeführt, so dass sich eine Strömung vom Werkstück weg zur Absaugstation hin einstellt. Hierdurch werden übermäßige Lackkonzentrationen in der Kabinenluft vermieden.

Besonders bevorzugt ist es nach einer Weiterbildung der Erfindung, dass die mindestens eine Lufteintrittsöffnung oberhalb des Werkstücks angeordnet ist, wobei Luft durch die Lufteintrittsöffnung auf das Werkstück zuleitbar ist. Bevorzugt sind mehrere Lufteintrittsöffnungen vorgesehen. Es kann so eine besonders gute Umströmung des Werkstücks, welches insbesondere eine Karosserie eines Fahrzeuges sein kann, erreicht. Vorzugsweise befindet sich das Werkstück dabei mittig in der Lackierstation, vorzugsweise unmittelbar vertikal oberhalb des freistehenden Filterelementes in dem darunterliegenden Absaugraum. Es kann auch eine Einströmung von Frischluft entlang den Wänden erfolgen, was einem Lackniederschlag entgegenwirkt.

Eine weitere gute Abführung der belasteten Luft aus der Lackierstation wird nach einer Weiterbildung der Erfindung dadurch erreicht, dass die obenliegende Lackierstation von der untenliegenden Absaugstation über einen luftdurchlässigen, vorzugsweise gitterartigen, Trennboden abgeteilt ist.

Unter Umweltgesichtspunkten ist es besonders vorteilhaft, dass die mindestens eine Lufteintrittsöffnung über einen Leitungskanal mit der Ansaugöffnung verbunden ist, wobei zumindest ein Teil der gefilterten Abluft in die Lackierstation rückführbar ist. Im Verlauf des Leitungskanals kann neben einer Pump- oder Lüftungseinrichtung ein Feuchtigkeitsabscheider vorgesehen sein. Weiterhin ist es vorteilhaft, über eine Steuereinheit Frischluft teilweise der rückgeführten Luft zuzuführen und gleichzeitig einen Teil der gefilterten Abluft nach außen abzuleiten.

Das erfindungsgemäß eingesetzte Filterelement ist dadurch weitergebildet, dass das Filterelement einen Boden aufweist, in welchem etwa mittig die Austrittsöffnung ausgebildet ist und dass oberhalb des Bodens die Filterfläche einen Außenumfangsbereich des Filterelementes bildet und einen Filterinnenraum umschließt, der mit der Austrittsöffnung verbunden ist. Das Filterelement ist dabei insgesamt so ausgebildet, dass weitgehend über den gesamten Außenumfang eine Einströmung von Luft in das Filterelement ermöglicht wird. Hierdurch kann eine gleichmäßige Einströmung über den Außenumfangsbereich erzielt werden. Somit kann die Filterfläche insgesamt gleichmäßig genutzt werden. Dies erhöht die Standzeit des Filterelements.

Eine bevorzugte Ausführungsform des Filterelementes besteht darin, dass der Boden aus Metall zum Aufnahmen und Halten einer lösbaren Filtereinheit gebildet ist und dass an der Unterseite des Boden eines hülsenförmiger Aufsatzstutzen vorgesehen ist, welcher zum lösbaren Aufsetzen auf eine Ansaugöffnung einer Lackieranlage ausgebildet ist. Der Boden aus Metall mit dem Aufsatzstutzen ist somit wiederverwendbar und kann die Basis für ein Grundgerüst für das Filterelement darstellen. Auf dem Boden können auch nach oben ragende Stützen oder Fixierelemente für die Filtereinheit vorgesehen sein.

Gemäß einer bevorzugten Weiterbildung ist es vorgesehen, dass zumindest die lösbare Filtereinheit als ein Einwegelement ausgebildet ist. Dies erspart ein aufwändiges Entfernen der zähen klebrigen Lackschicht, welche sich an der Filterfläche der Filtereinheit niedergeschlagen hat. Die Filtereinheit ist dabei insgesamt aus einem kostengünstigen zweckmäßigen Material aufgebaut.

Eine weitere bevorzugte Ausführungsvariante der Erfindung besteht darin, dass das Filterelement und/oder die Filtereinheit einen sich nach oben vom Boden weg verjüngenden Umfangsbereich aufweisen. Dies ermöglicht ein sehr gutes Ansaugen von belasteter Luft, welche großflächig von oben anströmt. Durch diese Formgebung wird Luft mit Overspray von den Wänden der Lackieranlage effizient abgeleitet, so dass deren Verschmutzung mit Lack reduziert ist.

Besonders zweckmäßige Formgebungen bestehen darin, dass das Filterelement und/oder die Filtereinheit die Form eines Kegels, eines Kegelstumpfes, einer Halbkugel, einer glatten oder gestuften Pyramide aufweist.

Eine besonders kosteneffiziente Ausführungsvariante wird nach der Erfindung dadurch erzielt, dass zum Bilden der Filterfläche Filterzellen vorgesehen sind, welche zumindest teilweise aus einem Karton- oder Papiermaterial gebildet sind. Die Filterzellen können dabei insgesamt aus Karton- oder Papiermaterial gebildet sein oder zusätzlich luftdurchlässige Vliesmaterialien aus Textilstoffen, gitterartigen Elementen oder sonstigen geeigneten Filterelementen umfassen. Die Filterzellen bilden dabei Teilbereiche der Filtereinheit. Die einzelnen Filterzellen können dabei auswechselbar sein.

Bevorzugt ist es weiterhin, dass das Filterelement mit einem Filtermaterial, insbesondere an seiner Außenseite, bespannt ist. Das Filtermaterial kann ein Filtervlies, ein Filtergewebe, eine Filtermembran oder ein sonstiges luftdurchlässiges Filtergebilde sein. Das Filtermaterial kann auf einem Gerüst aufgespannt sein, welches klappbar sein kann. Kombinationen mit anderen Filtermaterialien an der Innen- oder Außenseite sind möglich.

Das erfindungsgemäße Verfahren zum Lackieren eines Werkstücks ist dadurch gekennzeichnet, dass die Abluft über eine Ansaugöffnung abgeführt wird, welche in einem unteren Bereich der Absaugstation angeordnet ist, und dass das Filterelement auf die Ansaugöffnung aufgesetzt wird, wobei das Filterelement etwa mittig in einem Ansaugraum der Lackierstation angeordnet wird. Mit dem erfindungsgemäßen Verfahren können die zuvor beschriebenen Vorteile erzielt werden.

Besonders bevorzugt ist es dabei, dass eine Lackieranlage verwendet wird, wie sie zuvor beschrieben wurde. Weiterhin ist es erfindungsgemäß bevorzugt, dass die Luft über ein Filterelement abgesaugt wird, wie oben dargelegt.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine schematische Querschnittsansicht durch eine Lackieranlage nach der Erfindung;
- Fig. 2: eine perspektivische Ansicht einer Absaugstation einer erfindungsgemäßen Lackieranlage;
- Fig. 3: eine weitere perspektivische Ansicht der Lackieranlage von Fig. 2 beim Wechseln eines Filterelementes;
- Fig. 4: eine vergrößerte Detailansicht der erfindungsgemäßen Lackieranlage von Fig. 2 und Fig. 3 beim Ausfahren eines Filterelementes aus der Absaugstation;
- Fig. 5: eine perspektivische Ansicht der Lackieranlage der Figuren 2 bis 4 beim Einfahren eines neuen Filterelementes;
- Fig. 6: eine perspektivisches Ansicht eines erfindungsgemäßen Filterelementes von oben;
- Fig. 7: eine perspektivische Ansicht des erfindungsgemäßen Filterelementes von Fig. 6 von unten; und
- Fig. 8: eine perspektivische Schnittdarstellung des Filterelementes der Figuren 6 und 7.

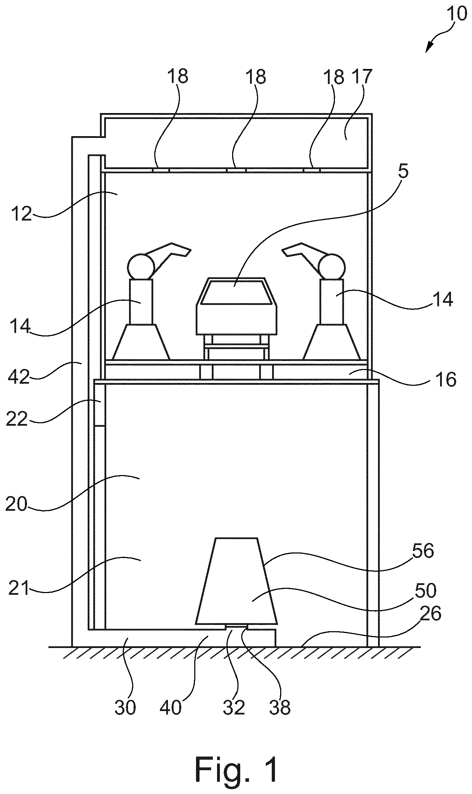

Eine erfindungsgemäße Lackieranlage 10 gemäß Fig. 1 weist eine obenliegende Lackierstation 12 und eine darunterliegende Absaugstation 20 auf, welche über einen gitterartigen, luftdurchlässigen Trennboden 16 voneinander getrennt sind. In der Lackierstation 12 wird ein Werkstück 5 mittels einer oder mehrerer Lackiervorrichtungen 14 mit einer Lackbeschichtung versehen. Im dargestellten Ausführungsbeispiel ist das Werkstück 5 eine Karosserie eines Kraftfahrzeuges, welche mittels Lackierrobotern als Lackiervorrichtungen 14 lackiert wird. Über Lufteintrittsöffnungen 18 von einem Einströmkanal 17 im Deckenbereich der Lackierstation 12 wird beständig Frischluft zugeführt. Abluft mit feinen Lackpartikeln, auch Overspray genannt, wird durch den Trennboden 16 nach unten in die Absaugstation 20 abgeleitet.

Die Absaugstation 20 weist einen Absaugraum 21 auf, welcher von Seitenwänden 22 umgrenzt ist. In einem Mittenbereich des Absaugraumes 21 ist an einem Bodenbereich 26 eine Absaugeinrichtung 30 mit einem kegelstumpfförmigen Filterelement 50 angeordnet. Das Filterelement 50 ist, wie später noch näher erläutert wird, auf einen Zentrierstutzen 38 einer Ansaugöffnung 32 aufgesetzt. Zum Bilden der Absaugeinrichtung 30 ist die Ansaugöffnung 32 mit einem Leitungskanal 40 verbunden, welcher sich entlang des Bodenbereiches 26 nach außen erstreckt. Der Leitungskanal 40 führt über eine vertikale Zuführung 42 zu dem Einströmkanal 17 im Deckenbereich der Lackierstation 12. Hierdurch kann gefilterte Luft wieder in die Lackierstation 12 zurückgeführt werden. Die Strömung wird durch eine Pumpe beziehungsweise einen Lüfter erzeugt, der nicht dargestellt ist. Weiterhin können entlang der Zuführung 42 weitere Behandlungseinrichtungen vorgesehen sein, etwa eine Einrichtung zum Entfeuchten der Luft oder eine Einrichtung zum Aufwärmen oder Kühlen oder eine Einrichtung zum Einleiten von frischer Außenluft und/oder Ableiten von Prozessluft nach außen.

Durch die Absaugeinrichtung 30 mit dem mittig angeordneten Filterelement 50, welches entlang des gesamten Umfangs von den Seitenwänden 22 beabstandet ist, und zwar mit einem Abstand von vorzugsweise 1 bis 3 Metern, wird Luft mit Overspray mittig nach unten abgesaugt, so dass ein Niederschlag von Lackpartikeln an den Seitenwänden 22 reduziert oder weitgehend vermieden wird.

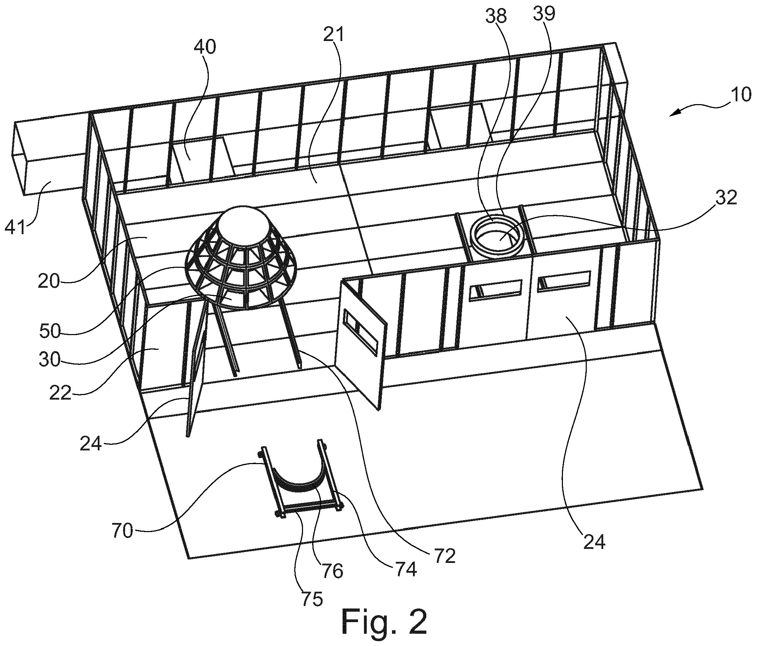

Die Lackpartikel der angesaugten Luft können sich an einer Filterfläche 56 des Filterelementes 50 absetzen. Dabei setzt sich das Filterelement 50 allmählich zu, so dass das Filterelement 50 in vorgegebenen Zeitabständen zu wechseln ist. Wie aus Fig. 2 zu sehen ist, ist die Lackieranlage 10 mit einer erfindungsgemäßen Wechselvorrichtung 70 versehen. Diese umfasst einen Transportwagen 74, welcher ein Fahrgestell 75 mit Rädern aufweist. Zum positionsgenauen Aufnehmen oder Absetzen eines Filterelements 50 weist der Transportwagen einen halbkreisförmigen Anschlag 76 auf, welcher korrespondierend zu einem hülsenförmigen Zentrierstutzen 38 mit ringförmigem Aufnahmeflansch 39 ausgebildet ist. Der Zentrierstutzen 38 ist an einer zweiten Ansaugöffnung 32 der Absaugeinrichtung 30 in dem Absaugraum 21 dargestellt, wobei in der Darstellung gemäß Fig. 2 auf diese zweite Ansaugöffnung 32 noch kein Filterelement 50 aufgesetzt ist. Die Ansaugöffnungen 32 sind jeweils über horizontal verlaufende Leitungskanäle 40 mit einem querverlaufenden Sammelkanal 41 verbunden, um eine Luftrückführung der gefilterten Luft durchzuführen.

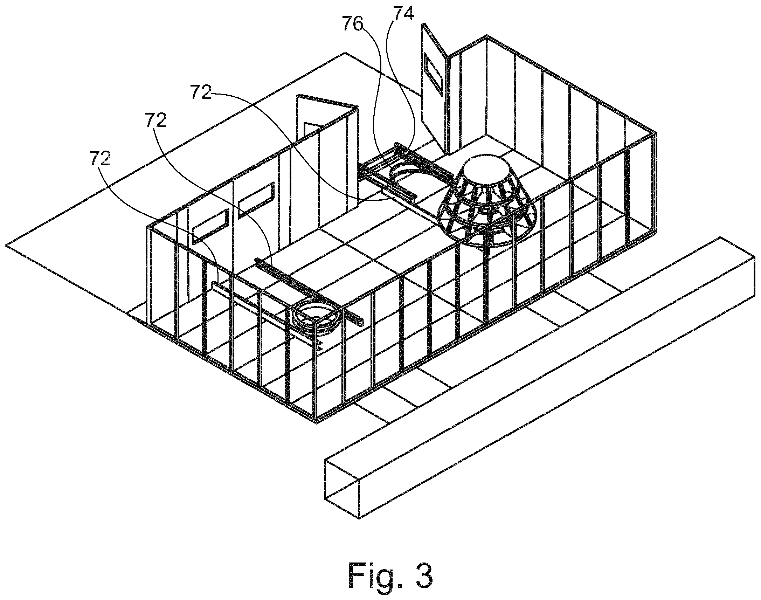

Zum Wechseln werden die zweiflügligen Tore 24, welche in den Seitenwänden 20 vorgesehen sind, geöffnet. Sodann kann gemäß Fig. 3 der Transportwagen 74 in den Absaugraum 21 entlang von zwei parallel angeordneten, C-förmigen Schienen 72 eingefahren werden, wie anschaulich in Fig. 3 dargestellt ist. Das Einschieben kann von Hand oder automatisiert erfolgen. Die Schienen 72 können auch noch außerhalb der Absaugstation 20 weitergeführt sein. Der Transportwagen 74 wird zu dem Filterelement 50 eingefahren, bis der halbringförmige Anschlag 76 an dem Zentrierstutzen 38 anliegt. Anschließend kann ein oberes Aufnahmeteil 80 des Fahrgestells 75 des Transportwagens 74 mittels einer Hubeinrichtung 78 angehoben werden. Der Aufnahmeteil 80 des Fahrgestells 75 ist dabei über vertikale Teleskopstreben 79 mit dem unteren Fahrgestell 75 höhenverstellbar verbunden. Die Hubeinrichtung 78 kann mit einem Kniehebelmechanismus ähnlich einem Wagenheber ausgebildet sein. Die Hubeinrichtung 78 kann von Hand oder pneumatisch oder hydraulisch mit Stellzylindern betätigt werden.

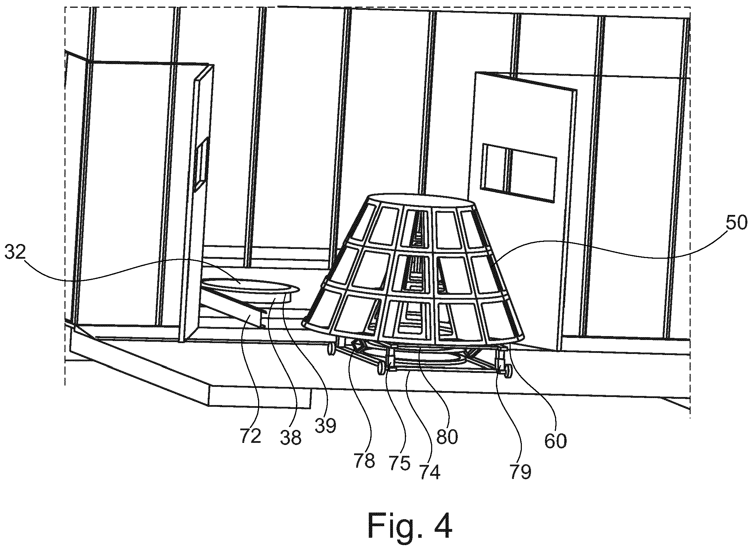

Mittels der Hubeinrichtung 78 gelangt der Aufnahmeteil 80 des Fahrgestells 75 mit einem plattenförmigen Boden 60 des Filterelementes 50 in Kontakt, wobei das Filterelement 50 insgesamt von einem Aufnahmeflansch 39 am Zentrierstutzen 38 der Ansaugöffnung 32 abgehoben wird. In dieser angehobenen Transportposition kann nun das Filterelement 50 mit dem Transportwagen 74 nach außen ausgeschoben werden, wie anschaulich in Fig. 4 dargestellt ist. Dies kann motorisch oder von Hand erfolgen.

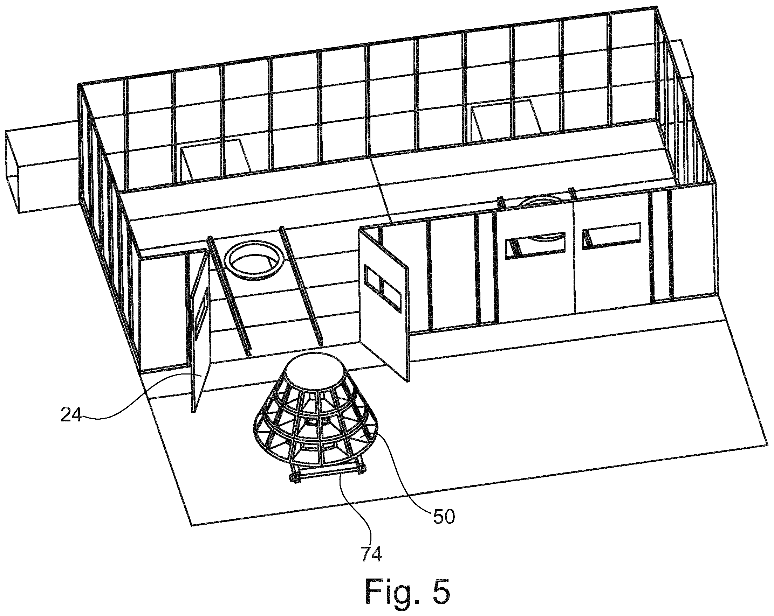

Mit dem Transportwagen 74 kann das verbrauchte Filterelement 50 zur Entsorgung abgefahren werden. Gleichzeitig kann ein neues Filterelement 50 über denselben oder einen anderen Transportwagen 74 in die Absaugstation 20 eingeschoben werden, wie anschaulich in Fig. 5 dargestellt ist. Durch den halbkreisförmigen Anschlag 76 am Transportwagen 74 kann das neue Filterelement 50 am Transportwagen 74 zentriert und beim Einschieben auch zentriert zu der Absaugöffnung 32 angeordnet und aufgesetzt werden. Abschließend kann das Tor 24 wieder geschlossen werden, so dass der Betrieb der Lackieranlage 10 fortgesetzt werden kann. Es wird so ein schneller, unkomplizierter Wechsel des Filterelementes 50 ermöglicht.

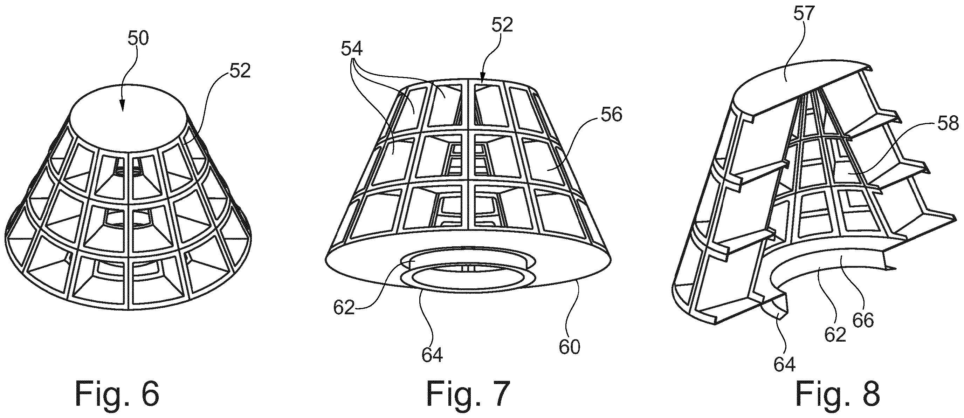

Der Aufbau eines erfindungsgemäßen Filterelementes 50 ist anschaulich in den Figuren 6 bis 8 verdeutlich. Das Filterelement 50 weist einen metallischen, ringscheibenförmigen Boden 60 auf, an dessen Unterseite ein hülsenförmiger Aufsatzstutzen 62 angeordnet ist. An dessen unterem Rand ist ein ringscheibenförmiger Dichtkragen 64 angeordnet, welcher leicht konisch, nach oben verjüngt, ausgebildet ist. Der konische Dichtkragen 64 korrespondiert mit einem entsprechend konisch ausgebildeten Aufnahmeflansch 39 am Zentrierstutzen 38 der Lackieranlage 10, so dass eine Zentrierung des Filterelementes 50 auf dem Zentrierstutzen 38 erleichtert ist.

Auf dem metallischen Boden 60 ist eine kegelstumpfförmige Filtereinheit 52 angeordnet, welche als ein Einwegelement ausgebildet ist. Die Filtereinheit 52 ist aus einzelnen kassettenartigen Filterzellen 54 aufgebaut, deren Grundrahmen vorzugsweise aus Karton gebildet ist. Innerhalb der Filterzellen 52 ist zum Bilden der Filterfläche 56 ein geeignetes Filtermaterial, etwa Papier, ein Textil etc. oder eine Kombination verschiedener Materialien angeordnet. Durch den konischen Außenumfangsbereich des Filterelements 50 wird Luft sowohl von oben als auch von der Seite angesaugt, so dass Luft mit Lackoverspray besonders gut angesaugt und damit entfernt von den umgebenden Seitenwänden 22 einer Absaugstation 20 gehalten werden kann.

Die Filterzellen 52 umgeben einen kegelartigen Filterinnenraum 58, von welchem die gefilterte Luft nach unten über die Austrittsöffnung 66 durch die Absaugeinrichtung 30 abgeführt werden kann. Eine Oberseite des kegelstumpfförmigen Filterelementes 50 ist mit einer Abdeckplatte 57 versehen, welche vorzugsweise aus Karton gebildet sein kann.

## Patentansprüche

1. Lackieranlage zum Lackieren eines Werkstücks (5) mit
- einer Lackierstation (12), in welcher mittels mindestens einer Lackiervorrichtung (14) eine Beschichtung auf das Werkstück (5) aufsprühbar ist, und
- einer Absaugstation (20), welche unterhalb der Lackierstation (12) angeordnet ist und eine Absaugeinrichtung (30) mit einem Filterelement (50) aufweist, über welche Luft mit Overspray aus der Lackierstation (12) ansaugbar ist, wobei Overspray aus der angesaugten Luft an dem Filterelement (50) abgeschieden wird,
**dadurch gekennzeichnet,**
- **dass** die oben liegende Lackierstation (12) von der unten liegenden Absaugstation (20) über einen luftdurchlässigen, vorzugsweise gitterartigen, Trennboden (16) abgeteilt ist,
- **dass** in einem unteren Bereich der Absaugstation (20) eine Ansaugöffnung (32) an einem Bodenbereich (26) zum Abführen von Abluft angeordnet ist,
- **dass** das Filterelement (50) auf die nach oben gerichtete Ansaugöffnung (32) aufgesetzt ist und
- **dass** das Filterelement (50) mittig und frei in einem von Seitenwänden umgrenzten Absaugraum (21) der Absaugstation (20) angeordnet ist.

2. Lackieranlage nach Anspruch 1,
**dadurch gekennzeichnet,**
**dass** an der Lackierstation (12) mindestens eine Lufteintrittsöffnung (18) vorgesehen ist, durch welche Luft zuführbar ist.

3. Lackieranlage nach Anspruch 2,
**dadurch gekennzeichnet,**
**dass** die mindestens eine Lufteintrittsöffnung (18) oberhalb des Werkstücks (5) angeordnet ist, wobei Luft durch die Lufteintrittsöffnung (18) auf das Werkstück (5) zuleitbar ist.

4. Lackieranlage nach einem der Ansprüche 2 oder 3,
**dadurch gekennzeichnet,**
**dass** die mindestens eine Lufteintrittsöffnung (18) über einen Leitungskanal (40) mit der Ansaugöffnung (32) verbunden ist, wobei zumindest ein Teil der gefilterten Abluft in die Lackierstation (12) rückführbar ist.

5. Lackieranlage nach einem der Ansprüche 1 bis 4,
**dadurch gekennzeichnet,**
- **dass** das Filterelement (50) eine Filterfläche (56), welche zum Durchtritt von Luft und zum Abscheiden von Overspray aus der Luft ausgebildet ist, und eine Austrittsöffnung (66) zum Abführen von gefilterter Luft aus dem Filterelement (50) aufweist,
- **dass** das Filterelement (50) einen Boden (60) aufweist, in welchem etwa mittig die Austrittsöffnung (66) ausgebildet ist, und
- **dass** oberhalb des Bodens (60) die Filterfläche (56) einen Außenumfangsbereich des Filterelements (56) bildet und einen Filterinnenraum (58) umschließt, welcher mit der Austrittsöffnung (66) verbunden ist.

6. Lackieranlage nach Anspruch 5,
**dadurch gekennzeichnet,**
- **dass** der Boden (60) aus Metall zum Aufnehmen und Halten einer lösbaren Filtereinheit (52) gebildet ist und
- **dass** an der Unterseite des Bodens (60) ein hülsenförmiger Aufsatzstutzen (62) vorgesehen ist, welcher zum lösbaren Aufsetzen auf eine Ansaugöffnung (32) einer Lackieranlage (10) ausgebildet ist.

7. Lackieranlage nach Anspruch 6,
**dadurch gekennzeichnet,**
**dass** zumindest die lösbare Filtereinheit (52) als ein Einwegelement ausgebildet ist.

8. Lackieranlage nach einem der Ansprüche 5 bis 7,
**dadurch gekennzeichnet,**
**dass** das Filterelement (50) und/oder die Filtereinheit (52) einen sich nach oben vom Boden weg verjüngenden Außenumfangsbereich aufweisen.

9. Lackieranlage nach einem der Ansprüche 7 oder 8,
**dadurch gekennzeichnet,**
**dass** das Filterelement (50) und/oder die Filtereinheit (52) die Form eines Kegels, eines Kegelstumpfes, einer Halbkugel, einer glatten oder gestuften Pyramide aufweist.

10. Lackieranlage nach einem der Ansprüche 6 bis 9,
**dadurch gekennzeichnet,**
**dass** zum Bilden der Filterfläche (56) Filterzellen (54) vorgesehen sind, welche zumindest teilweise aus einem Karton- oder Papiermaterial gebildet sind.

11. Lackieranlage nach einem der Ansprüche 1 bis 10,
**dadurch gekennzeichnet,**
**dass** das Filterelement (50) ein Filtermaterial aufweist, welches ein Filtervlies ist.

12. Verfahren zum Lackieren eines Werkstücks (5), wobei
- in einer Lackierstation (12) mittels mindestens einer Lackiervorrichtung (14) eine Beschichtung auf das Werkstück (5) aufgesprüht wird und
- in einer Absaugstation (20), welche unterhalb der Lackierstation (12) angeordnet ist, über eine Absaugeinrichtung (30) mit einem Filterelement (50) Luft mit Overspray aus der Lackierstation (12) angesaugt wird, wobei Overspray aus der angesaugten Luft an dem Filterelement (50) abgeschieden wird,
**dadurch gekennzeichnet,**
- **dass** durch einen luftdurchlässigen, vorzugsweise gitterartigen, Trennboden, welcher die oben liegende Lackierstation (42) von der unten liegenden Absaugstation (2) abteilt, die Luft mit Overspray aus der Lackierstation in die Absaugstation angesaugt wird,
- **dass** die Abluft über eine nach oben gerichtete Ansaugöffnung (32) an einem Bodenbereich (26) abgeführt wird, welche in einem unteren Bereich der Absaugstation (20) angeordnet ist, und
- **dass** das Filterelement (50) auf die Ansaugöffnung (32) aufgesetzt wird, wobei das Filterelement (50) mittig und frei in einem von Seitenwänden umgrenzten Ansaugraum (21) der Absaugstation (20) angeordnet wird.

13. Verfahren nach Anspruch 12, **dadurch gekennzeichnet,**
**dass** eine Lackieranlage (10) nach einem der Ansprüche 1 bis 5 verwendet wird.

## Claims

1. Painting facility for painting a workpiece (5), having
- a painting station (12), in which a coating can be sprayed onto the workpiece (5) by way of at least one painting device (14), and
- an extraction station (20), which is arranged underneath the painting station (12) and has an extraction device (30) with a filter element (50), via which air with overspray can be extracted out of the painting station (12), wherein overspray is separated out of the extracted air at the filter element (50),
**characterized in that**
- the painting station (12) at the top is separated from the extraction station (20) at the bottom via an air-permeable, preferably lattice-like separating floor (16),
- that an extraction opening (32) in a base region (26) for leading away exhaust air is arranged in a lower region of the extraction station (20),
- that the filter element (50) is placed onto the upward-facing extraction opening (32), and
- that the filter element (50) is arranged centrally and free in an extraction chamber (21) of the extraction station (20), which extraction chamber (21) is delimited by side walls.

2. Painting facility according to claim 1,
**characterized in that**
at least one air inlet opening (18) is provided on the painting station (12), through which air inlet opening (18) air can be fed.

3. Painting facility according to claim 2,
**characterized in that**
the at least one air inlet opening (18) is arranged above the workpiece (5), wherein air can be fed through the air inlet opening (18) onto the workpiece (5).

4. Painting facility according to any one of claims 2 or 3,
**characterized in that**
the at least one air inlet opening (18) is connected to the extraction opening (32) via a duct (40), wherein at least part of the filtered exhaust air can be fed back into the painting station (12).

5. Painting facility according to any one of claims 1 to 4,
**characterized in that**
- the filter element (50) is provided with a filter surface (56), which is designed to let through air and separate overspray out of the air, and an outlet opening (66) to discharge filtered air out of the filter element (50),
- that the filter element (50) has a base (60), in which the outlet opening (66) is formed roughly centrally, and
- that above the base (60), the filter surface (56) forms an outer circumference region of the filter element (56) and encloses a filter interior (58), which is connected to the outlet opening (66).

6. Painting facility according to claim 5,
**characterized in that**
- the base (60) is made of metal for receiving and holding a detachable filter unit (52), and
- that a sleeve-shaped attachment piece (62) is provided on the underside of the base (60) and is designed to be detachably placed onto an extraction opening (32) of a painting facility (10).

7. Painting facility according to claim 6,
**characterized in that**
at least the detachable filter unit (52) is designed as a disposable element.

8. Painting facility according to any one of claims 5 to 7,
**characterized in that**
the filter element (50) and/or the filter unit (52) has an outer circumference region that tapers upwards away from the base.

9. Painting facility according to any one of claims 7 or 8,
**characterized in that**
the filter element (50) and/or the filter unit (52) has the form of a cone, a truncated cone, a hemisphere, a smooth or stepped pyramid.

10. Painting facility according to any one of claims 6 to 9,
**characterized in that**
filter cells (54) are provided to form the filter surface (56) and are made at least in part of a cardboard or paper material.

11. Painting facility according to any one of claims 1 to 10,
**characterized in that**
the filter element (50) has a filter material which is a filter fleece.

12. Method for painting a workpiece (5), wherein
- in a painting station (12), a coating is sprayed onto the workpiece (5) by way of at least one painting device (14), and
- in an extraction station (20), which is arranged underneath the painting station (12), air with overspray is extracted out of the painting station (12) via an extraction device (30) with a filter element (50), wherein overspray is separated out of the extracted air at the filter element (50),
**characterized in that**
- the air with overspray is extracted out of the painting station into the extraction station via an air-permeable, preferably lattice-like separating floor, which separates the painting station (42) at the top from the extraction station (2) at the bottom,
- that the exhaust air is led away via an upward-facing extraction opening (32) in a base region (26), which extraction opening (32) is arranged in a lower region of the extraction station (20), and
- that the filter element (50) is placed onto the extraction opening (32), wherein the filter element (50) is arranged centrally and free in an extraction chamber (21) of the extraction station (20), which extraction chamber (21) is delimited by side walls.

13. Method according to claim 12,
**characterized in that**
a painting facility (10) according to anyone of claims 1 to 5 is used.

## Revendications

1. Installation de peinture pour la peinture d'une pièce (5) comportant
- un poste de peinture (12), dans lequel un revêtement peut être pulvérisé sur la pièce (5) au moyen d'au moins un dispositif de peinture (14),
- un poste d'aspiration (20), qui est disposé en dessous du poste de peinture (12) et présente un système d'aspiration (30) comportant un élément filtrant (50), via lequel de l'air comportant un excédent de pulvérisation en provenance du poste de peinture (12) peut être aspiré, dans laquelle l'excédent de pulvérisation est isolé de l'air aspiré au niveau de l'élément filtrant (50),
**caractérisée en ce que**
- le poste de peinture (12) du dessus est séparé du poste d'aspiration (20) du dessous via un fond de séparation (16) perméable à l'air, de préférence de type grille,
- dans une zone inférieure du poste d'aspiration (20) est disposée une ouverture d'aspiration (32) au niveau d'une zone de fond (26) pour l'évacuation de l'air à évacuer,
- l'élément filtrant (50) est posé sur l'ouverture d'aspiration (32) dirigée vers le haut et
- l'élément filtrant (50) est disposé au milieu et librement dans une chambre d'aspiration (21) du poste d'aspiration (20) délimitée par des parois latérales.

2. Installation de peinture selon la revendication 1,
**caractérisée en ce que**
au niveau du poste de peinture (12) est prévue au moins une ouverture d'entrée d'air (18) à travers laquelle de l'air peut être conduit.

3. Installation de peinture selon la revendication 2,
**caractérisée en ce que**
l'au moins une ouverture d'entrée d'air (18) est disposée au-dessus de la pièce (5), dans laquelle de l'air peut être conduit sur la pièce (5) par le biais de l'ouverture d'entrée d'air (18).

4. Installation de peinture selon l'une des revendications 2 ou 3,
**caractérisée en ce que**
l'au moins une ouverture d'entrée d'air (18) est reliée à l'ouverture d'aspiration (32) via un canal de conduite (40), dans laquelle au moins une partie de l'air à évacuer filtré est rapatriée dans le poste de peinture (12).

5. Installation de peinture selon l'une des revendications 1 à 4,
**caractérisée en ce que**
- l'élément filtrant (50) présente une surface filtrante (56) qui est réalisée pour le passage d'air et pour isoler l'excédent de peinture de l'air, et une ouverture de sortie (66) pour évacuer l'air filtré de l'élément filtrant (50),
- l'élément filtrant (50) présente un fond (60) dans lequel l'ouverture de sortie (66) est réalisée sensiblement au milieu, et
- au-dessus du fond (66) la surface filtrante (56) forme une zone périphérique externe de l'élément filtrant (56) et enferme une chambre interne filtrante (58) qui est reliée à l'ouverture de sortie (66).

6. Installation de peinture selon la revendication 5,
**caractérisée en ce que**
- le fond (60) est constitué de métal pour accueillir et maintenir une unité filtrante (52) amovible et
- au niveau de la face inférieure du fond (60) est prévu un raccord de pose en forme de douille (62) qui est réalisé pour être posé de manière amovible sur une ouverture d'aspiration (32) d'une installation de peinture (10).

7. Installation de peinture selon la revendication 6,
**caractérisée en ce que**
au moins l'unité filtrante (52) amovible est réalisée en tant qu'élément à usage unique.

8. Installation de peinture selon l'une des revendications 5 à 7,
**caractérisée en ce que**
l'élément filtrant (50) et/ou l'unité filtrante (52) présentent une zone périphérique externe se rétrécissant vers le haut en s'éloignant du fond.

9. Installation de peinture selon l'une des revendications 7 ou 8,
**caractérisée en ce que**
l'élément filtrant (50) et/ou l'unité filtrante (52) présentent la forme d'un cône, d'un tronc de cône, d'un hémisphère, d'une pyramide lisse ou à étages.

10. Installation de peinture selon l'une des revendications 6 à 9,
**caractérisée en ce que**
des cellules filtrantes (54) sont prévues pour la formation de la surface filtrante (56), lesquelles sont constituées au moins en partie d'un matériau en carton ou en papier.

11. Installation de peinture selon l'une des revendications 1 à 10,
**caractérisée en ce que**
l'élément filtrant (50) présente un matériau filtrant qui est un non-tissé filtrant.

12. Procédé pour la peinture d'une pièce (5), dans lequel
- un revêtement est pulvérisé sur la pièce (5) dans un poste de peinture (12) au moyen d'au moins un dispositif de peinture (14) et
- dans un poste d'aspiration (20) qui est disposé en dessous du poste de peinture (12), de l'air comportant un excédent de pulvérisation en provenance du poste de peinture (12) est aspiré via un dispositif d'aspiration (30) comportant un élément filtrant (50), dans lequel l'excédent de pulvérisation est isolé de l'air aspiré au niveau de l'élément filtrant (50),
**caractérisé en ce que**
- l'air comportant un excédent de pulvérisation en provenance du poste de peinture est aspiré dans le poste d'aspiration par le biais d'un fond de séparation perméable à l'air, de préférence de type grille, qui isole le poste de peinture (42) du dessus du poste d'aspiration (2) du dessous,
- l'air à évacuer est évacué via une ouverture d'aspiration (32) dirigée vers le haut au niveau d'une zone de fond (26) qui est disposée dans une zone inférieure du poste d'aspiration (20), et
- l'élément filtrant (50) est posé sur l'ouverture d'aspiration (32), dans lequel l'élément filtrant (50) est disposé au milieu et librement dans une chambre d'aspiration (21) du poste d'aspiration (20) délimitée par des parois latérales.

13. Procédé selon la revendication 12,
**caractérisé en ce que**
une installation de peinture (10) selon l'une des revendications 1 à 5 est utilisée.
